# DEMANDE DE BREVET EUROPEEN

(11) **EP 1 367 769 A1**
(43) Date de publication de la demande: **03.12.2003**
(21) Numéro de dépôt: 03290909.5
(22) Date de dépôt: 11.04.2003
(51) Int. Cl.: H04L 12/24

(54) **Dispositif et procédé de classification de messages d'alarme résultant d'une violation d'accord de niveau de service dans un réseau de communications**

(30) Priorité: 23.05.2002 FR 0206288
(71) Demandeur: ALCATEL, 75008 Paris (FR)
(72) Inventeur: Betge-Brezetz, Stéphane, 75015 Paris (FR); Delegue, Gérard, 94230 Cachan (FR); Marilly, Emmanuel, 92160 Antony (FR); Martinot, Olivier, 91210 Draveil (FR)
(74) Mandataire: Chaffraix, Sylvain

(57) **Abrégé**

Un dispositif de contrôle de données de service au sein d'un réseau de communications comprend des moyens de contrôle (3) agencés pour classer selon au moins un critère choisi des messages d'alarme générés par des moyens de détection (2) en cas de détection de violation(s) d'au moins une spécification d'un niveau de service, dit « SLS », à partir de données de service provenant du réseau, et pour délivrer ces messages d'alarme classés à une interface graphique (8), de sorte qu'ils soient affichés en fonction de leur classement.

## Description

L'invention concerne le domaine des communications entre terminaux au sein d'un réseau, et plus particulièrement celui du contrôle des services offerts à ces terminaux.

En raison de l'évolution permanente des équipements constituant les réseaux, du nombre et de la variété des technologies mises en oeuvre par ces équipements, et du nombre et de la variété des services offerts aux clients qui utilisent les réseaux et leurs équipements, les opérateurs des réseaux sont de plus en plus souvent confrontés à des problèmes de gestion de priorités et de niveaux de service (ou SLM pour « Service Level Management »).

Des outils ont été proposés pour faciliter cette gestion. Mais, ces outils ne délivrent généralement des messages d'alarme qu'en cas de détection d'un problème survenu, ou susceptible de survenir, sur un équipement du réseau (comme par exemple les messages « TRAP » du protocole SNMP) ou sur une performance du réseau. De tels outils sont par exemple décrits dans les demandes de brevet US2002/019866 et WO02/10944.

Les solutions de ces documents présentent un inconvénient majeur en ce que les alarmes réseau ne sont pas classées et sont donc difficiles à analyser par l'opérateur du système de gestion de réseau.

De surcroît, même dans les systèmes plus évolués dans lesquels les alarmes réseau sont classées en fonction de leur niveau de gravité (ou sévérité) et/ou de leur origine, cette classification ne prend en compte ni les informations relatives aux niveaux de service ni celles relatives aux niveaux de priorité, lesquelles peuvent varier d'un client à l'autre et d'un service à l'autre.

Or, certains problèmes de réseau font l'objet d'un message d'alarme réseau alors qu'ils n'ont pas de réelle influence sur le niveau de service offert au client (c'est notamment le cas des erreurs de routeur qui sont généralement rattrapées par des routeurs aval), tandis que d'autres problèmes de réseau entraînent une diminution du niveau de service en dessous d'une spécification sans faire l'objet d'un message d'alarme réseau (c'est notamment le cas de certaines congestions au niveau d'interfaces de routeur qui induisent un retard de transmission de flux client). Cela est particulièrement gênant lorsque cette diminution provoque ce que l'homme de l'art appelle une violation d'accord de niveau de service (ou SLA pour « Service Level Agreement »), passé entre un opérateur et un client, ou une violation de spécification technique de niveau de service (ou SLS pour « Service Level Specification »).

En outre, les outils actuels, développés pour gérer les messages d'alarme réseau, ne permettent pas à l'opérateur de déterminer la sévérité d'une violation de SLA, laquelle dépend notamment de l'importance du service et/ou du client concernés.

De plus, certains outils délivrent des messages d'alarme prédictifs, reposant sur des analyses d'évolution de données de service, censés permettre à l'opérateur d'anticiper un futur problème, mais ils ne lui permettent pas d'analyser la sévérité d'un message d'alarme prédictif en prenant en compte un message d'alarme antérieur, lié à une violation déjà survenue. Or, un message d'alarme prédictif peut s'avérer plus critique pour un client « important » qu'un message d'alarme déjà survenu et concernant un client moins important.

L'invention a donc pour but de remédier à tout ou partie des inconvénients précités.

Elle propose à cet effet un dispositif de contrôle de données de service au sein d'un réseau de communications, comprenant des moyens de contrôle capables, d'une part, de classer selon au moins un critère choisi des messages d'alarme générés par des moyens de détection lorsqu'ils détectent la violation d'au moins une spécification d'un niveau de service, dit « SLS », consécutivement à la réception de données de service du réseau, et d'autre part, de délivrer ces messages d'alarme classés à une interface graphique de sorte qu'ils soient affichés en fonction de leur classement, par exemple sur le moniteur de contrôle de l'opérateur du réseau.

L'opérateur disposant ainsi de messages d'alarme triés en fonction de la gravité de la violation, il peut concentrer son action sur les opérations à entreprendre pour pallier ces violations de façon optimale.

Le dispositif selon l'invention pourra comporter de nombreuses caractéristiques complémentaires qui pourront être prises séparément et/ou en combinaison, et en particulier :
- des moyens de détection comprenant des premiers moyens d'analyse pour suivre l'évolution de certaines au moins des données de service reçues, de manière à générer un message d'alarme prédictif lorsque l'évolution est susceptible d'aboutir à une violation de SLS ;
- des moyens de détection comprenant des seconds moyens d'analyse pour déterminer l'origine d'une violation au sein du réseau ;
- des messages d'alarme, générés par les moyens de détection, comportant des données complémentaires choisies dans un groupe comprenant au moins un niveau d'urgence, un niveau de fiabilité de prédiction de violation, un identifiant d'utilisateur pénalisé par une violation, un identifiant de service pénalisé par une violation, un statut de violation (prédictif ou survenu) ;
- des moyens de détection alimentés par une base de données en premières données auxiliaires définissant les violations de SLS (ou SLA) ;
- des moyens de contrôle comprenant des moyens d'évaluation pour associer à chaque message d'alarme délivré par les moyens de détection au moins un niveau de violation, d'au moins un type choisi, en fonction d'au moins un critère d'évaluation choisi. Dans ce cas, le critère d'évaluation peut être choisi en fonction des données complémentaires et/ou par de secondes données auxiliaires représentatives, par exemple, de niveaux de priorité attachés à des services et/ou des utilisateurs. Les moyens d'évaluation sont alors préférentiellement alimentés en secondes données auxiliaires par la base de données. Par ailleurs, les moyens d'évaluation peuvent être configurables, par exemple à l'aide de données définissant des règles (ou « policies ») ;
- des moyens de contrôle comprenant des moyens de corrélation pour modifier l'un au moins des niveaux de violation d'un message d'alarme délivré par les moyens d'évaluation et présentant au moins une relation choisie avec l'un au moins des messages d'alarme précédemment reçus. Dans ce cas, les moyens de corrélation peuvent être configurables, par exemple à l'aide de données définissant des règles (ou « policies ») ;
- des moyens de contrôle comprenant des moyens de classement pour classer les messages d'alarme, associés à au moins un type de niveau de violation, en fonction d'au moins un critère de classement choisi. Dans ce cas, les moyens de contrôle peuvent comporter une table dans laquelle sont stockés les différents types de violation de SLS (ou SLA) en fonction d'un ou plusieurs critères de classement, éventuellement hiérarchisés. Le critère de classement pourra par exemple porter sur les différents niveaux de violation et/ou sur des paramètres complémentaires stockés dans la table, ceux-ci pouvant être transmis par l'interface graphique sur ordre de l'opérateur.

Le dispositif selon l'invention peut également comporter la base de données contenant les premières et secondes données auxiliaires et/ou les moyens de détection. Par ailleurs, les moyens de contrôle du dispositif peuvent intégrer l'interface graphique.

L'invention porte également sur un procédé de contrôle de données de service au sein d'un réseau de communications, dans lequel i) on génère des messages d'alarme en cas de détection d'une violation d'au moins un SLS à partir de données de service provenant du réseau, ii) on classe selon au moins un critère choisi ces messages d'alarme, et iii) on affiche les messages d'alarme en fonction de leur classement.

Le procédé selon l'invention pourra comporter de nombreuses caractéristiques complémentaires qui pourront être prises séparément et/ou en combinaison, et en particulier :
- on peut suivre l'évolution de certaines au moins des données de service reçues, de manière à générer un message d'alarme prédictif lorsque l'évolution est susceptible d'aboutir à une violation de SLS ;
- on peut déterminer l'origine d'une violation au sein du réseau avant de générer un message d'alarme ;
- les messages d'alarme peuvent comporter des données complémentaires choisies dans un groupe comprenant au moins un niveau d'urgence, un niveau de fiabilité de prédiction de violation, un identifiant d'utilisateur pénalisé par une violation, un identifiant de service pénalisé par une violation, un statut de violation (prédictif ou survenu) ;
- avant l'opération de classement on peut associer à chaque message d'alarme au moins un niveau de violation, d'au moins un type choisi, en fonction d'au moins un critère d'évaluation choisi. Ce critère d'évaluation peut être choisi en fonction des données complémentaires et/ou des secondes données auxiliaires représentatives, par exemple, de niveaux de priorité attachés à des services et/ou des utilisateurs. Après cette opération d'association de niveau de violation, on peut modifier l'un au moins des niveaux de violation d'un message d'alarme présentant au moins une relation choisie avec l'un au moins des messages d'alarme précédemment reçus. Dans ce cas, après l'opération d'association et/ou l'opération de modification, on peut classer les messages d'alarme, associés à au moins un type de niveau de violation, en fonction d'un ou plusieurs critères de classement choisis, éventuellement hiérarchisés, les différents types de violation de SLS pouvant être stockés dans une table en fonction du critère de classement. Par ailleurs, le critère de classement peut porter sur les différents niveaux de violation et/ou sur des paramètres complémentaires stockés dans la table.

L'invention peut être mise en oeuvre dans tout type de réseau de communications, privé ou public, et en particulier dans les réseaux Internet (IP), ATM et Frame Relay. Par ailleurs, l'invention peut permettre le contrôle de nombreux services, et en particulier IP VPN, le haut débit, les services « web », le multimédia et 3G.

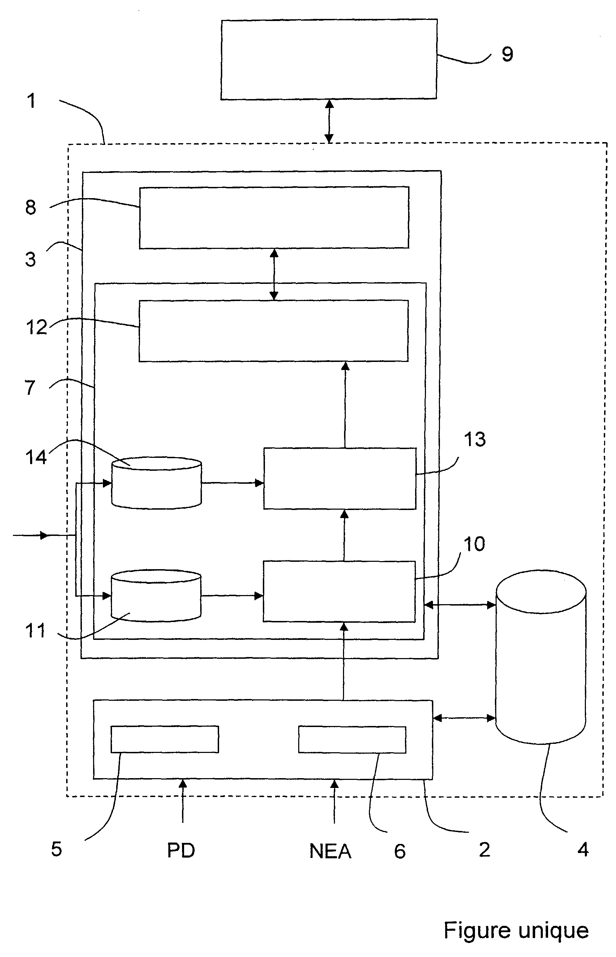

D'autres caractéristiques et avantages de l'invention apparaîtront à l'examen de la description détaillée ci-après, et de l'unique figure annexée qui illustre de façon schématique un exemple de réalisation d'un dispositif selon l'invention. Cette figure est, pour l'essentiel, de caractère certain. En conséquence, elle pourra non seulement servir à compléter l'invention, mais aussi contribuer à sa définition, le cas échéant.

Le dispositif selon l'invention est destiné à être installé au coeur d'un réseau de communications de manière à contrôler les données de service concernant les flux de données que s'échangent des terminaux de client raccordés audit réseau. A titre d'exemple non limitatif, on considère dans ce qui suit que le réseau est le réseau public Internet dans lequel les données sont échangées selon le protocole IP. Mais, il pourrait s'agir d'un réseau privé, de type Intranet, ou de plusieurs réseaux public(s) et/ou privé(s) raccordés les uns aux autres. Par ailleurs, on considère dans ce qui suit que les clients du réseau sont liés à l'opérateur par des accords de niveau de service (ou SLA) qui incluent des parties techniques définies par des spécifications de niveau de service (ou SLS).

Préférentiellement, le dispositif 1 est implanté dans un serveur contrôlé par l'opérateur du réseau.

Le dispositif 1 illustré sur la figure comporte un module de détection 2 et un module de contrôle 3, raccordés l'un à l'autre et préférentiellement alimentés, au moins en partie, par une base de données principale 4. Cette configuration n'est qu'un exemple de réalisation. Le dispositif selon l'invention peut en effet ne comporter qu'un module de contrôle 3 alimenté par un module de détection 2 indépendant.

Le module de détection 2 reçoit certaines au moins des données de service du réseau, et de préférence les données PD représentatives des performances du réseau, ou d'une partie au moins de celui-ci, ainsi que les alarmes NEA émises par les équipements du réseau, ou une partie au moins d'entre eux. Les données de performance PD sont par exemple les bandes passantes utilisées et les mesures de flux, et les alarmes NEA sont par exemple émises par les routeurs et les interfaces du réseau.

Dans l'exemple illustré, le module de détection 2 comporte tout d'abord un premier module d'analyse (prédictive) 5 destiné à suivre l'évolution des données de service PD et NEA pour délivrer des messages d'alarme dits « prédictifs » lorsque leur évolution est susceptible d'aboutir à la violation d'une spécification de niveau de service, ci-après désignée par « violation de SLS ». Cette analyse prédictive repose sur des algorithmes de prévision alimentés par les valeurs successives des différentes données de service reçues, dans un intervalle de temps choisi.

Préférentiellement, le module de détection 2 comprend également un second module d'analyse 6 destiné à déterminer la cause de chaque violation de SLS au sein du réseau, notamment à partir des messages d'alarme NEA délivrés par les équipements du réseau. Il pourra s'agir, par exemple, d'une erreur de routage au niveau d'un routeur ou d'un dysfonctionnement au niveau d'une interface. Chaque fois que le second module d'analyse 6 reçoit un message d'alarme NEA, il l'analyse et s'il estime qu'il a induit une violation de SLS il génère un message d'alarme, ci-après désigné par « message d'alarme survenu », à destination du module de contrôle 3.

Pour mener à bien leur analyse des données de service PD et NEA, les modules d'analyse 5 et 6 utilisent des définitions de violation de SLS (ou premières données auxiliaires) qui sont stockées, dans l'exemple illustré, dans la base de données principale 4. Bien entendu, lorsque l'on ne prévoit pas une telle base de données, les définitions de violation de SLS sont directement stockées dans le module de détection 2.

Par ailleurs, il est préférable de joindre aux messages d'alarme prédictifs et survenus certaines informations complémentaires afin d'optimiser leur traitement par le module de contrôle 3. Ces informations complémentaires sont, par exemple, représentatives du niveau d'urgence de la prédiction d'une violation de SLS (délai restant avant que ne survienne un problème prédit), du niveau de fiabilité de la prédiction d'une violation de SLS, de l'identifiant du client pénalisé par la violation, de l'identifiant du service pénalisé par la violation de SLS, du statut de la violation de SLS, c'est-à-dire le fait qu'elle est prédite ou déjà survenue.

Le module de contrôle 3 comprend un module d'évaluation et de classement 7 couplé au module de détection 2 et à une interface graphique 8, par exemple de type GUI (pour « Graphic User Interface »).

Cette interface graphique 8 fait, dans cet exemple, partie intégrante du module de contrôle 3, mais elle pourrait en être indépendante. Elle est également couplée à une interface utilisateur 9 du serveur de l'opérateur.

Le module d'évaluation et de classement 7 comporte tout d'abord un module d'évaluation 10 alimenté en messages d'alarme prédictifs et survenus par le module de détection 2. Il est destiné à estimer, violation après violation, la gravité (ou sévérité) de chaque violation de SLS en fonction d'un ou plusieurs critères d'évaluation paramétrables. Les critères d'évaluation sont définis par un expert de l'opérateur, par exemple sous forme de règles (ou « policies ») ou de formules, définies par des données préférentiellement stockées dans une première base de données auxiliaire 11 alimentée, par exemple, par l'interface utilisateur 9. Les règles et/ou formules contenues dans cette première base auxiliaire 11 sont de préférence modifiables de façon dynamique.

Chaque fois que le module d'évaluation 10 reçoit un message d'alarme prédictif ou survenu, il lui associe au moins un niveau de violation, d'au moins un type choisi, en fonction du ou des critères d'évaluation qui correspondent au type du message d'alarme et aux informations complémentaires qui l'accompagnent (notamment le niveau d'urgence (ou délai d'intervention) et le niveau de fiabilité dans le cas d'un message d'alarme prédictif). Préférentiellement, le critère d'évaluation choisi pour un message d'alarme est également, ou alternativement, fonction de secondes données auxiliaires représentatives, par exemple, du niveau de priorité du service et/ou du niveau de priorité (ou de l'importance) du client. Ces secondes données auxiliaires sont, dans l'exemple illustré, stockées dans la base de données principale 4. Bien entendu, lorsque l'on ne prévoit pas une telle base de données, les secondes données auxiliaires sont directement stockées dans le module d'évaluation 10.

Parmi les nombreux critères d'évaluation, on peut citer notamment :
- pour une même violation de SLA (ou SLS), le niveau de gravité est plus élevé pour un agent principal (tel que le point d'accès au réseau privé virtuel IP (ou IP VPN) du siège social d'un groupe) que pour un agent secondaire (tel que le point d'accès au réseau privé virtuel IP d'une filiale du groupe),
- le niveau de gravité d'une violation prédite de SLA (ou SLS) est plus important que celui d'une autre violation déjà survenue si la violation prédite concerne un client plus important que celui concerné par la violation survenue,
- pour une même violation de SLA (ou SLS), le niveau de gravité est plus élevé s'il concerne un client ayant déjà rencontré plusieurs fois (ou fréquemment) le même problème (le seuil de tolérance du problème, défini dans le SLS correspondant, pouvant être prochainement atteint),
- une prédiction de violation de SLA (ou SLS) est plus importante qu'une autre violation si son niveau de fiabilité (par exemple le niveau de précision de la prédiction) est plus important.

Chaque message d'alarme associé à un ou plusieurs niveaux de sévérité (de violation) est alors délivré à un module de classement 12 du module d'évaluation et de classement 7, éventuellement après traitement par un module de corrélation (ou de réévaluation) 13, comme illustré sur la figure.

Ce module de corrélation (ou de réévaluation) 13 est destiné à modifier l'un au moins des niveaux de sévérité d'un message d'alarme délivré par le module d'évaluation 10 lorsque ce message d'alarme présente au moins une relation choisie avec l'un au moins des messages d'alarme précédemment générés. En effet, plusieurs messages d'alarme, présentant un certain niveau de sévérité, peuvent avoir la même origine (ou cause), par exemple une rupture de liaison, et du fait de leur combinaison devenir plus préoccupants. Le module de corrélation 13 est donc chargé de vérifier si un niveau de sévérité est réellement adapté au problème qu'il signale, compte tenu des autres messages d'alarme reçus. Cette vérification s'effectue en fonction d'un ou plusieurs critères de réévaluation paramétrables, définis par un expert de l'opérateur, par exemple sous forme de règles ou de formules, définies par des données préférentiellement stockées dans une seconde base de données auxiliaire 14 alimentée, par exemple, par l'interface utilisateur 9. Les règles et/ou formules contenues de cette seconde base auxiliaire 14 sont de préférence modifiables de façon dynamique.

Parmi les nombreux critères de réévaluation, on peut citer notamment :
- plusieurs prédictions de violation de SLS (ou SLA) ayant une même cause (par exemple la congestion d'un point d'accès à un service) peuvent entraîner une augmentation de leur niveaux de gravité (ou sévérité) respectifs,
- plusieurs violations de SLS (ou SLA) prédites ou survenues, concernant un même client, peuvent entraîner une augmentation de leur niveaux de gravité (ou sévérité) respectifs,
- l'augmentation de la fréquence d'occurrence d'une violation de SLS (ou SLA) peut entraîner une augmentation de son niveau de gravité (ou sévérité).

Si cela s'avère nécessaire, le module de corrélation 13 modifie un ou plusieurs niveaux de sévérité du message d'alarme, puis il le communique au module de classement 12.

Ce module de classement 12 est destiné à classer les messages d'alarmes qu'il reçoit du module d'évaluation 10 ou du module de corrélation 13 en fonction d'un ou plusieurs critères de classement choisis. Parmi les nombreux critères de classement, on peut citer notamment :
- le classement en fonction d'un client spécifique,
- le classement en fonction d'un service spécifique,
- le classement en fonction de l'urgence : le niveau de gravité d'une première violation prédite de SLA (ou SLS) est plus important que celui d'une seconde violation prédite si la première violation doit survenir avant la seconde violation,
- le classement en fonction de la fiabilité: le niveau de gravité d'une première violation prédite de SLA (ou SLS) est plus important que celui d'une seconde violation prédite, devant survenir sensiblement dans le même intervalle de temps, si la première violation présente un niveau de fiabilité supérieur à celui de la seconde violation,
- le classement en fonction de la cause d'une violation de SLS (ou SLA) : par exemple on effectue un classement en fonction de l'équipement (ou du type d'équipement) responsable d'un problème,
- le classement en fonction de la criticité du client : par exemple on classe les clients en fonction de leur ordre d'importance pour l'opérateur,
- le classement par pénalités estimées suite à une violation de SLS (ou SLA).

Mais on peut également envisager des combinaisons de classements, comme par exemple :
- un classement par service et par client,
- un classement en fonction de la cause d'une violation de SLS (ou SLA), et pour chaque cause le classement en fonction de chaque client, et pour chaque client le classement en fonction de chaque service.

De telles combinaisons de classements peuvent être représentées par une hiérarchisation des classements successifs.

Préférentiellement, le module de classement alimente une table dans laquelle sont stockés, par ordre de sévérité, les différents types de violations de SLS compte tenu du ou des critères de classement (ou paramètres complémentaires). Cette table est par exemple réalisée sous la forme de colonnes associées à différents critères de classement et classées selon un ordre choisi (par exemple selon la hiérarchisation précitée). Dans ce cas, chaque ligne de la table correspond de préférence à une violation de SLS (ou SLA).

Egalement de préférence, les critères de classement sont communiqués au module de classement 12 par l'interface utilisateur 9, via l'interface graphique 8.

Une fois classés par le module de classement 12, les messages sont communiqués à l'interface graphique 8 afin d'être affichés sur l'écran du serveur de l'opérateur. L'affichage peut s'effectuer selon deux modes. Un premier mode consiste à afficher les messages d'alarme les uns à la suite des autres conformément à leur classement. Un second mode consiste à afficher les messages d'alarme conformément à leur ordre d'arrivée, mais accompagnés d'une information spécifiant leurs classements respectifs, les uns par rapport aux autres. Comme indiqué précédemment, l'affichage des classements peut s'effectuer de façon hiérarchisée, notamment lorsque plusieurs critères de classement sont utilisés, éventuellement en combinaison.

Les modules de détection et de contrôle du dispositif peuvent être respectivement réalisés sous la forme de circuits électroniques, de modules logiciels (ou informatiques), ou d'une combinaison de circuits et de logiciels.

L'invention offre également un procédé de contrôle de données de service au sein d'un réseau de communications. Celui-ci peut être mis en oeuvre à l'aide du dispositif présenté ci-avant. Les fonctions et sous-fonctions principales et optionnelles assurées par les étapes de ce procédé étant sensiblement identiques à celles assurées par les différents moyens constituants le dispositif, seules seront résumées ci-après les étapes mettant en oeuvre les fonctions principales du procédé selon l'invention.

Ce procédé consiste i) à générer des messages d'alarme en cas de détection de violation d'au moins un SLS à partir de données de service provenant du réseau, ii) à classer selon au moins un critère choisi ces messages d'alarme, et iii) à afficher les messages d'alarme en fonction de leur classement.

Avant l'opération de classement, on peut associer à chaque message d'alarme au moins un niveau de violation, d'au moins un type choisi, en fonction d'au moins un critère d'évaluation choisi. Cette opération d'évaluation peut être suivie d'une opération de corrélation (ou réévaluation) consistant à modifier l'un au moins des niveaux de violation d'un message d'alarme lorsque celui-ci présente au moins une relation choisie avec l'un au moins des messages d'alarme précédemment reçus. Dans ce cas, l'opération de classement des messages d'alarme vient après l'opération d'association et/ou l'opération de corrélation.

Grâce à l'invention, il est désormais possible de gérer non seulement les alarmes réseau liées à un équipement du réseau, mais également les alarmes de qualité de service liées à une violation de SLA ou SLS au sein du réseau. Cela permet d'envisager la possibilité de dédommagements ou de contreparties, contractuels, pour les clients lésés.

De plus, cela permet à l'opérateur du réseau de se concentrer sur la seule résolution des problèmes qui sont effectivement prioritaires selon ses propres critères.

En outre, l'invention s'applique à une grande variété de réseaux d'échange de données, et notamment les réseaux IP, ATM et Frame Relay, ainsi qu'à de nombreux types de services, et notamment IP VPN, le haut débit (par exemple l'accès ADSL), les services « web », le multimédia et 3G, dans la mesure où de nombreux critères d'évaluation et de classement peuvent être utilisés, indépendamment du format des SLS et de l'implémentation.

L'invention ne se limite pas aux modes de réalisation de procédés et dispositifs décrits ci-avant, seulement à titre d'exemple, mais elle englobe toutes les variantes que pourra envisager l'homme de l'art dans le cadre des revendications ci-après.

## Revendications

1. Dispositif de contrôle de données de service au sein d'un réseau de communications, **caractérisé en ce qu'**il comporte des moyens de contrôle (3) agencés pour classer selon un critère choisi des messages d'alarme générés par des moyens de détection (2) en cas de détection de violation(s) d'au moins une spécification d'un niveau de service, dit « SLS », à partir de données de service provenant dudit réseau, et pour délivrer lesdits messages d'alarme classés à une interface graphique (8) de sorte qu'ils soient affichés en fonction de leur classement.

2. Dispositif selon la revendication 1, **caractérisé en ce que** lesdits moyens de détection (2) comprennent des premiers moyens d'analyse (5) agencés pour suivre l'évolution de certaines au moins des données de service reçues de manière à générer un message d'alarme prédictif lorsque ladite évolution est susceptible d'aboutir à une violation de SLS.

3. Dispositif selon l'une des revendications 1 et 2, **caractérisé en ce que** lesdits moyens de détection (2) comprennent des seconds moyens d'analyse (6) agencés pour déterminer l'origine d'une violation au sein dudit réseau.

4. Dispositif selon l'une des revendications 1 à 3, **caractérisé en ce que** lesdits messages d'alarme générés par les moyens de détection (2) comportent des données complémentaires choisies dans un groupe comprenant au moins un niveau d'urgence, un niveau de fiabilité de prédiction de violation, un identifiant d'utilisateur pénalisé par une violation, un identifiant de service pénalisé par une violation, un statut de violation, ledit statut pouvant être « prédictif » ou « survenu ».

5. Dispositif selon l'une des revendications 1 à 4, **caractérisé en ce que** lesdits moyens de détection (2) sont alimentés par une base de données (4) en premières données auxiliaires définissant lesdites violations de SLS.

6. Dispositif selon l'une des revendications 1 à 5, **caractérisé en ce que** lesdits moyens de contrôle (3) comprennent des moyens d'évaluation (10) agencés pour associer à chaque message d'alarme délivré par les moyens de détection (2) au moins un niveau de violation, d'au moins un type choisi, en fonction d'au moins un critère d'évaluation choisi.

7. Dispositif selon la revendication 6, **caractérisé en ce que** ledit critère d'évaluation est choisi en fonction desdites données complémentaires et/ou de secondes données auxiliaires représentatives de niveaux de priorité attachés à des services et/ou des utilisateurs.

8. Dispositif selon la revendication 7, **caractérisé en ce que** lesdits moyens d'évaluation (10) sont alimentés en secondes données auxiliaires par une base de données (4).

9. Dispositif selon l'une des revendications 6 à 8, **caractérisé en ce que** lesdits moyens d'évaluation (10) sont configurables.

10. Dispositif selon l'une des revendications 6 à 9, **caractérisé en ce que** lesdits moyens de contrôle (3) comprennent des moyens de corrélation (13) agencés pour modifier l'un au moins des niveaux de violation d'un message d'alarme délivré par les moyens d'évaluation (10) et présentant au moins une relation choisie avec au moins l'un des messages d'alarme précédemment reçus.

11. Dispositif selon la revendication 10, **caractérisé en ce que** lesdits moyens de corrélation (13) sont configurables.

12. Dispositif selon l'une des revendications 9 et 11, **caractérisé en ce que** l'un au moins desdits moyens d'évaluation (10) et desdits moyens de corrélation est configurable à l'aide de données définissant des règles.

13. Dispositif selon l'une des revendications 6 à 12, **caractérisé en ce que** lesdits moyens de contrôle (3) comprennent des moyens de classement (12) agencés pour classer lesdits messages d'alarme associés à au moins un type de niveau de violation en fonction d'au moins un critère de classement choisi.

14. Dispositif selon la revendication 13, **caractérisé en ce que** lesdits moyens de classement (12) comportent une table dans laquelle sont stockés les différents types de violation de SLS en fonction dudit critère de classement.

15. Dispositif selon l'une des revendications 13 et 14, **caractérisé en ce que** ledit critère de classement porte au moins sur les différents niveaux de violation.

16. Dispositif selon l'une des revendications 13 à 15, **caractérisé en ce que** ledit critère de classement porte sur au moins un paramètre complémentaire stocké dans ladite table.

17. Dispositif selon la revendication 16, **caractérisé en ce que** ladite interface graphique (8) est propre, sur ordre d'un opérateur, à transmettre auxdits moyens de classement (12) lesdits paramètres complémentaires.

18. Dispositif selon l'une des revendications 13 à 17, **caractérisé en ce que** lesdits moyens de classement (12) sont agencés pour classer lesdits messages d'alarme en fonction d'au moins deux critères de classement choisis.

19. Dispositif selon la revendication 18, **caractérisé en ce qu'**en présence d'au moins deux critères de classement lesdits moyens de classement (12) sont agencés pour effectuer un classement de façon hiérarchisée.

20. Dispositif selon l'une des revendications 5 à 19, **caractérisé en ce qu'**il comprend ladite base de données (4).

21. Dispositif selon l'une des revendications 1 à 20, **caractérisé en ce qu'**il comprend lesdits moyens de détection (2).

22. Dispositif selon l'une des revendications 1 à 21, **caractérisé en ce que** lesdits moyens de contrôle comprennent l'interface graphique (8).

23. Procédé de contrôle de données de service au sein d'un réseau de communications, **caractérisé en ce qu'**il consiste à i) générer des messages d'alarme en cas de détection de violation(s) d'au moins une spécification d'un niveau de service, dit « SLS », à partir de données de service provenant dudit réseau, ii) classer selon au moins un critère choisi lesdits messages d'alarme, et iii) afficher lesdits messages d'alarme en fonction de leur classement.

24. Procédé selon la revendication 23, **caractérisé en ce que** l'on suit l'évolution de certaines au moins des données de service reçues de manière à générer un message d'alarme prédictif lorsque ladite évolution est susceptible d'aboutir à une violation de SLS.

25. Procédé selon l'une des revendications 23 et 24, **caractérisé en ce que** l'on détermine l'origine d'une violation au sein dudit réseau avant de générer un message d'alarme.

26. Procédé selon l'une des revendications 23 à 25, **caractérisé en ce que** lesdits messages d'alarme comportent des données complémentaires choisies dans un groupe comprenant au moins un niveau d'urgence, un niveau de fiabilité de prédiction de violation, un identifiant d'utilisateur pénalisé par une violation, un identifiant de service pénalisé par une violation, un statut de violation, ledit statut pouvant être « prédictif » ou « survenu ».

27. Procédé selon l'une des revendications 23 à 26, **caractérisé en ce qu'**avant l'opération de classement on associe à chaque message d'alarme au moins un niveau de violation, d'au moins un type choisi, en fonction d'au moins un critère d'évaluation choisi.

28. Procédé selon la revendication 27, **caractérisé en ce que** ledit critère d'évaluation est choisi en fonction desdites données complémentaires et/ou de secondes données auxiliaires représentatives de niveaux de priorité attachés à des services et/ou des utilisateurs.

29. Procédé selon l'une des revendications 27 et 28, **caractérisé en ce qu'**après l'opération d'association de niveau de violation on modifie l'un au moins des niveaux de violation d'un message d'alarme présentant au moins une relation choisie avec au moins l'un des messages d'alarme précédemment reçus.

30. Procédé selon l'une des revendications 27 à 29, **caractérisé en ce qu'**après l'opération d'association et/ou de modification on classe lesdits messages d'alarme associés à au moins un type de niveau de violation en fonction d'au moins un critère de classement choisi.

31. Procédé selon la revendication 30, **caractérisé en ce que** les différents types de violation de SLS sont stockés dans une table en fonction dudit critère de classement.

32. Procédé selon l'une des revendications 30 et 31, **caractérisé en ce que** ledit critère de classement porte au moins sur les différents niveaux de violation.

33. Procédé selon l'une des revendications 30 à 32, **caractérisé en ce que** ledit critère de classement porte sur au moins un paramètre complémentaire stocké dans ladite table.

34. Procédé selon l'une des revendications 30 à 33, **caractérisé en ce que** l'opération de classement s'effectue en fonction d'au moins deux critères de classement.

35. Procédé selon la revendication 34, **caractérisé en ce qu'**en présence d'au moins deux critères de classement ladite opération de classement s'effectue de façon hiérarchisée.

36. Utilisation des procédé et dispositif selon l'une des revendications précédentes dans les réseaux choisis parmi les réseaux publics et privés.

37. Utilisation selon la revendication 36, **caractérisée en ce que** le réseau est choisi dans un groupe comprenant les réseaux Internet (IP), ATM et Frame Relay.

38. Utilisation selon l'une des revendications 36 et 37, pour le contrôle de services choisis dans un groupe comprenant au moins IP VPN, le haut débit, les services « web », le multimédia et 3G.
